(19) Europäisches Patentamt / European Patent Office / Office européen des brevets

(11) **EP 2 387 867 A1**

(12) **EUROPÄISCHE PATENTANMELDUNG**

(43) Veröffentlichungstag:
   **23.11.2011 Patentblatt 2011/47**

(51) Int Cl.:
   ***A01B 29/04*** *(2006.01)*     ***A01F 25/18*** *(2006.01)*
   ***A01F 25/16*** *(2006.01)*

(21) Anmeldenummer: **11166047.8**

(22) Anmeldetag: **13.05.2011**

(84) Benannte Vertragsstaaten:
   **AL AT BE BG CH CY CZ DE DK EE ES FI FR GB GR HR HU IE IS IT LI LT LU LV MC MK MT NL NO PL PT RO RS SE SI SK SM TR**
   Benannte Erstreckungsstaaten:
   **BA ME**

(30) Priorität: **19.05.2010 DE 202010006957 U**

(71) Anmelder: **Stehr, Jürgen**
   **36318 Schwalmtal (DE)**

(72) Erfinder: **Stehr, Jürgen**
   **36318 Schwalmtal (DE)**

(74) Vertreter: **Knefel, Cordula**
   **Wertherstrasse 16**
   **35578 Wetzlar (DE)**

(54) **Anbaugerät für Traktoren oder andere Trägerfahrzeuge**

(57) Die Erfindung betrifft ein Anbaugerät für Traktoren oder andere Trägerfahrzeuge zum Einsatz bei landwirtschaftlichen Verdichtungsarbeiten, welches wenigstens einen Walzenkörper aufweist, bei dem der wenigstens eine Walzenkörper frei drehbar an dem Anbaugerät gelagert ist, und bei dem auf dem wenigstens einen Walzenkörper voneinander beabstandete und zueinander versetzte Erhöhungen angeordnet sind.

Fig.2

EP 2 387 867 A1

**Beschreibung**

Silo oder Gärfutter ist durch Milchsäuregärung konserviertes hochwertiges Grünfutter für Nutztiere, vor allem für Wiederkäuer und hier insbesondere Rinder, da diese durch die Fermentation im Pansen in der Lage sind, Struktur-Kohlenhydrate zu verdauen. Silierung eignet sich auch als Konservierungsmethode für nachwachsende Rohstoffe, die als Energiequelle in Biogasanlagen dienen. Für diese Art der Konservierung sind grundsätzlich alle Grünfuttermittel geeignet, unter anderem Gras (Grassilage), Mais (Maissilage), Klee, Luzerne, Ackerbohnen, Getreide (Ganzpflanzensilage). Auch Nebenprodukte wie Biertreber und Rübenblätter können siliert werden. Die Silage findet Verwendung als Viehfutter und Substrat für Biogasanlagen.

Silagen dienen in Biogasanlagen als energiereiches Substrat. Häufig wird Maissilage eingesetzt, da Mais einen hohen Ertrag an Trockenmasse pro Fläche ermöglicht. Zudem liefert Maissilage bei der Vergärung einen hohen Gasertrag. Wenn die Silage in die bekannten Fahrsilos eingebracht wird, ist eine gute Verdichtung erforderlich. Es ist wichtig, dass die organische Silage ohne Hohlräume gelagert wird. In Hohlräumen befindet sich nämlich ein hoher Sauerstoffgehalt, der dazu beiträgt, die eingelagerte Silagemasse zu verderben.

Nach dem Stand der Technik wird die Verdichtung hauptsächlich durch das Überfahren mit schweren Ackerschleppern durchgeführt. Die Bereifung dieser Schlepper ist jedoch so konzipiert, dass ein relativ geringer Bodendruck ausgeübt wird. Dieser wird jedoch bei der Mehrzahl von anderen Einsätzen in der Landwirtschaft gefordert. Der Trend zu immer stärkeren und schwereren Maschinen (höhere Zugkraft) hat als Folge auch eine höhere Bodenverdichtung und damit geringere Bodenerträge. Deswegen werden in der Praxis in der Mehrzahl ballonartige Niederdruckreifen verwandt, die das Fahrzeuggewicht besser verteilen und durch den niedrigen Reifeninnendruck auch weniger Bodendruck verursachen.

Das ist wichtig, um die vorhandene Bodenstruktur nicht durch hohe Verdichtung zu schädigen, weil kein Sau-erstoff mit $CO_2$-Anteilen an die Wurzeln gelangen kann. Dies ist jedoch für ein gutes, geregeltes und gesundes Wachstum der Pflanzen wichtig. So wird zum Beispiel der Flächendruck eines voll aufgelasteten Schleppers mit 18 Tonnen Gesamtgewicht mit circa 2 kg/cm$^2$ angegeben. Bei der Verdichtung der Silage mit schweren Ackerschleppern wird jedoch ein hoher Bodendruck gefordert, um die vorgegebenen Verdichtungswerte zu erreichen.

Aus der Praxis ist bekannt, dass mit diesem relativ kleinen Flächendruck, der durch das Überfahren mit Ak-kerschleppern entsteht, mit den herkömmlichen bekannten Methoden zu über 80 % nicht die erforderlichen Verdichtungswerte erreichbar sind. Diese sind jedoch erforderlich, um ein hochwertiges Futter oder hochwertiges Material zum Betreiben einer Biogasanlage zu erhalten. So soll die optimale Verdichtung bei Grassilage über 200 kg/m$^3$ und bei Maissilage über 220 kg/m$^3$ Trockenmasse liegen. Diese Werte werden häufig nach dem Stand der Technik mit herkömmlichen Methoden nicht erreicht. Die Folge sind erhebliche materielle und finanzielle Schäden, die zu verhindern sind.

Das der Erfindung zugrunde liegende technische Problem besteht darin, ein Verdichtungsgerät anzugeben, mit dem die genannten Nachteile beseitigt und ein besserer und schnellerer Verdichtungsvorgang erreicht wird.

Dieses technische Problem wird durch ein Anbaugerät mit den Merkmalen des Anspruches 1 gelöst.

Das erfindungsgemäße Anbaugerät für Traktoren oder andere Trägerfahrzeuge zum Einsatz bei landwirtschaftlichen Verdichtungsarbeiten, welches wenigstens einen Walzenkörper aufweist, zeichnet sich dadurch aus, dass der wenigstens eine Walzenkörper frei drehbar an dem Anbaugerät gelagert ist und dass auf dem wenigstens einen Walzenkörper voneinander beabstandete und zueinander versetzte Erhöhungen angeordnet sind.

Wichtig bei dem erfindungsgemäßen Anbaugerät ist, dass das gesetzlich zulässige Gesamtgewicht des Trägerfahrzeuges mit angebauter Verdichtereinheit (Anbaugerät) nicht überschritten wird. Dies ist wichtig, um eine schnelle Mobilität beim Umsetzen über öffentliche Straßen zu erhalten.

Das Hauptmerkmal der Erfindung ist, großes Gewicht auf eine kleine Auflagefläche zu bringen. Dazu ist keinerlei Antrieb zum Erreichen dynamischer Kräfte notwendig. Völlige Wartungsfreiheit sowie eine benutzerfreundliche Bedienung vereinen sämtliche Vorteile gegenüber aus der Praxis bekannten Silage-Verdichtungsgeräten.

Das erfindungsgemäße Anbaugerät weist den Vorteil auf, dass eine hohe statische Kraft knetend und walkend auf das zu verdichtende Material auf einer kleinen Fläche auftrifft, um somit einen hohen Bodendruck auf einer kleinen Fläche zu erzeugen.

Das Anbaugerät eignet sich besonders zur Verdichtung von aufgeschüttetem Silagematerial, ist jedoch auch in anderen Anwendungsgebieten einsetzbar.

Die Erhöhungen sind vorteilhaft als auf dem Mantel des wenigstens einen Walzenkörpers angeordnete relativ kleine, einzelne und zueinander versetzte Erhöhungen ausgebildet. Die Erhöhungen bilden eine geringere Oberfläche als die Mantelfläche des Walzenkörpers.

Gemäß einer besonders bevorzugten Ausführungsform der Erfindung weisen die Erhöhungen scharfe Kanten auf. Mit den scharfen Kanten wirken die Erhöhungen durch das Überfahren so auf das Silagematerial ein, dass eine hohe statische Kraft knetend und walkend auf das zu verdichtende Material auf einer kleinen Fläche einwirkt.

Eine weitere Ausführungsform der Erfindung sieht vor, dass die Erhöhungen eine Oberfläche und eine Seitenfläche aufweisen, und dass zwischen der Oberfläche und der Seitenfläche ein Winkel von höchsten 110 Grad vorgesehen ist. Hierdurch ist eine scharfe Kante ausgebildet.

Gemäß einer weiteren vorteilhaften Ausführungsform sind mehrere Walzenkörper nebeneinanderliegend vorgesehen. Die Walzenkörper können sich hierdurch unabhängig voneinander drehen. Darüber hinaus können einzelne Walzenkörper ausgetauscht werden, beispielsweise bei Verschleiß.

Eine weitere mögliche Ausführungsform der Erfindung sieht vor, dass der Walzenkörper als einzelne Walze ausgebildet ist. Hierdurch ist die Herstellung des Anbaugerätes einfacher, da lediglich ein Walzenkörper gelagert werden muss.

Eine besonders bevorzugte Ausführungsform der Erfindung sieht vor, dass das Anbaugerät ein Zusatzgewicht aufweist, welches verschwenkbar an dem Anbaugerät angeordnet ist. Durch das Verschwenken des Zusatzgewichtes kann dieses im Einsatz unter Anwendung des Hebelgesetzes derart verschwenkt werden, dass die statische Kraft und somit die vertikal nach unten einwirkende Linienlast erhöht wird.

Vorteilhaft ist das Anbaugerät ohne Antrieb ausgebildet. Hierdurch wird eine preiswerte Herstellung des Anbaugerätes gewährleistet. Darüber hinaus ist das Anbaugerät vollkommen wartungsfrei ausgebildet.

Das Anbaugerät weist vorteilhaft einen Tragrahmen auf und an dem Tragrahmen ist seitlich wenigstens eine Rolle angeordnet, derart, dass diese sich drehend horizontal an den Silowänden abstützen kann.

Weitere Merkmale und Vorteile der Erfindung ergeben sich anhand der zugehörigen Zeichnung, in der ein Ausführungsbeispiel eines Anbaugerätes nur beispielhaft dargestellt ist. In der Zeichnung zeigen:

Fig. 1    einen Traktor mit Anbaugerät mit Zusatzgewicht in Transport-Stellung;

Fig. 2    einen Traktor mit Anbaugerät mit Zusatzgewicht in Verdichtungs-Stellung;

Fig. 3    ein Anbaugerät in Draufsicht.

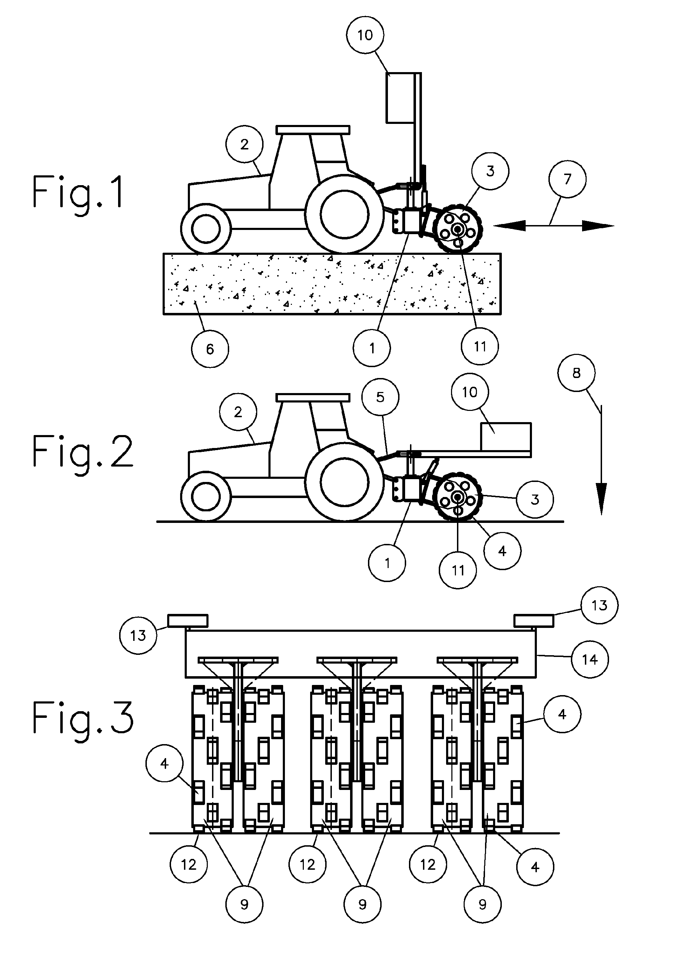

Fig. 1 und Fig. 2 zeigen ein Anbaugerät 1, nachfolgend Silageverdichter genannt, welches als Anbaugerät für einen Traktor 2 ausgebildet ist. Das Anbaugerät 1 weist einen zylindrischen Walzenkörper 3 auf. Auf dem Walzenkörper 3 sind Erhöhungen 4 (Stampffüße) angeordnet. Die Walzenkörper 3 sind mittig gelagerte, zylindrische Körper mit den genannten Erhöhungen oder Vorsprüngen.

Über eine genormte Dreipunkt-Hydraulikverbindung 5 wird das Anbaugerät 1 an den Traktor 2 oder andere Trägerfahrzeuge angehängt und über zu verdichtendes Silomaterial 6 in Richtung des Doppelpfeiles 7 hin- und hergerollt.

Vorzugsweise ist eine Aufnahme 5 als Schnellwechselvorrichtung 5 ausgelegt.

Die Erhöhungen 4 auf den zylindrischen Walzenkörpern 3 sind so angeordnet, dass sie im Umfang versetzt auf das Silomaterial 6 auftreffen. Diese Erhöhungen 4 leiten das komplette Gewicht des Anbaugerätes 1 mit ca. 60 % des Gewichtes des Traktors (Trägergerätes) 2 in das Silagematerial 6. Damit wird ein hoher Flächendruck auf eine kleine Fläche gebracht.

Diese hohen, vertikal nach unten in Richtung des Pfeiles 8 einwirkenden Kräfte treffen auf das aufgeschüttete Silomaterial 6. In diesem werden durch die Verdrängung, die beim Verdichten entsteht, Hohlräume geschlossen und der leichtere Sauerstoff, der sich in den Hohlräumen befindet, kann nach oben entweichen. Wenn die Hohlräume komplett geschlossen sind, ist die bestmögliche Verdichtung erreicht.

Wie in Fig. 3 dargestellt, sind, um eine große Flächenleistung zu gewährleisten, mehrere seitenversetzt in einer horizontalen Ebene angeordnete Walzenkörper (Verdichtungswalzen) 9 mit versetzt angeordneten Erhöhungen 4 vorgesehen.

Weiterhin kann man den Druck in Richtung des Pfeiles 8 auf das Anbaugerät 1 noch erhöhen, indem ein Zusatzgewicht 10, wie in Fig.2 dargestellt, hydraulisch über eine mittige Auflagelinie 11 der zylindrischen Walzenkörper, auf denen das gesamte Gewicht aufliegt, geschwenkt wird.

Hierbei wird das Archimedische Hebelgesetz angewandt.

$$\texttt{Kraft mal Kraftarm = Last mal Lastarm}$$

Wenn das Zusatzgewicht 10 von angenommenen zwei Tonnen einen Meter über die mittige Auflagelinie 11 des zylindrischen Walzenkörpers geschwenkt wird, ergibt das eine Linienlast von 13 Tonnen. (Eigengewicht der Verdichtungseinheit drei Tonnen + halbes Gewicht Trägergerät sechs Tonnen + Zusatzgewicht zwei Tonnen + Gewichtsverlagerung ( Fig 2) zwei Tonnen = 13 Tonnen).

Bei der vorgeschlagenen Anordnung von mehreren Verdichtungswalzen nebeneinander, die das Gewicht auf eine kleine Fläche leiten, ergibt sich eine Linienlast von 13.000 kg. Wenn dieses Gewicht auf angenommene 36 Quadratzentimeter verteilt wird (Breite der Erhöhungen 4 von angenommenen 6 cm x 6 cm auf den einzelnen Rädern) ergibt sich so eine Linienlast von circa 360 kg/cm.

Durch das Zurückschwenken des Zusatzgewichtes 10 (Fig. 1), wird das im öffentlichen Straßenverkehr zulässige Gesamtgewicht des Trägergerätes 2 mit Anbaugerät 2 nicht überschritten. Das Zusatzgewicht kann auch gleichzeitig als Schiebeschild ausgelegt sein, um das eingebrachte Silagematerial einzuebnen.

Durch mehrmaliges, versetztes Vor- und Zurückfahren in Richtung des Doppelpfeiles 7 wird somit eine schnelle und gute Verdichtung erreicht, die Hohlräume werden geschlossen und die Qualität des Silagematerials 6 bleibt erhalten und erhebliche materielle und damit verbundene finanzielle Schäden können vermieden werden.

Bezugszahlen

1    Anbaugerät

2    Traktor

3    zylindrischer Walzenkörper

4    Erhöhungen / Stampffüße

5    Aufnahme / Schnellwechselvorrichtung

6    Silomaterial

7    Doppelpfeil

8    Pfeil Lasteinleitung

9    Walzenkörper

10   Gewicht

11   mittige Auflagelinie

12   kleine Auflage (Oberfläche der Erhöhungen 4)

13   Rollen

14   Tragrahmen

**Patentansprüche**

1.  Anbaugerät für Traktoren oder andere Trägerfahrzeuge zum Einsatz bei landwirtschaftlichen Verdichtungsarbeiten, welches wenigstens einen Walzenkörper aufweist, **dadurch gekennzeichnet , dass** der wenigstens eine Walzenkörper (3, 9) frei drehbar an dem Anbaugerät gelagert ist und dass auf dem wenigstens einen Walzenkörper (3, 9) voneinander beabstandete und zueinander versetzte Erhöhungen (4) angeordnet sind.

2.  Anbaugerät nach Anspruch 1, **dadurch gekennzeichnet, dass** die Erhöhungen (4) scharfe Kanten aufweisen.

3.  Anbaugerät nach Anspruch 2, **dadurch gekennzeichnet, dass** die Erhöhungen (4) eine Oberfläche und eine Seitenfläche aufweisen, und dass zwischen der Oberfläche und der Seitenfläche ein Winkel von höchsten 110 Grad vorgesehen ist.

4.  Anbaugerät nach einem der vorhergehenden Ansprüche, **dadurch gekennzeichnet, dass** mehrere Walzenkörper (9) nebeneinanderliegend angeordnet sind.

5.  Anbaugerät nach Anspruch 1, **dadurch gekennzeichnet, dass** ein einstückig ausgebildeter Walzenkörper (3) vorgesehen ist.

6. Anbaugerät nach dem Anspruch 1, **dadurch gekennzeichnet, dass** das Anbaugerät (1) ein Zusatzgewicht (10) aufweist, welches verschwenkbar an dem Anbaugerät (1) angeordnet ist.

7. Anbaugerät nach einem der vorhergehenden Ansprüche, **dadurch gekennzeichnet, dass** das Anbaugerät (1) ohne Antrieb ausgebildet ist.

8. Anbaugerät nach einem der vorhergehenden Ansprüche, **dadurch gekennzeichnet, dass** das Anbaugerät (1) einen Tragrahmen (14) aufweist, und dass an dem Tragrahmen (14) seitlich wenigstens eine Rolle (13) angeordnet ist.

Fig.1

Fig.2

Fig.3

Europäisches
Patentamt

European
Patent Office

Office européen
des brevets

**EUROPÄISCHER RECHERCHENBERICHT**

Nummer der Anmeldung

EP 11 16 6047

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 423 998 A1 (AMAZONEN WERKEH DREYER GMBH & [DE] AMAZONEN WERKE DREYER H [DE]) 2. Juni 2004 (2004-06-02) * das ganze Dokument * ----- | 1-3,5,7 | INV. A01B29/04 A01F25/18 A01F25/16 |
| X | US 4 911 248 A (SCHREPFER MARTIN P [US]) 27. März 1990 (1990-03-27) * Spalte 3, Zeile 31 - Spalte 4, Zeile 53; Abbildungen 1-3 * ----- | 1-4,7 | |
| X | US 6 171 020 B1 (PIKNA DAN [US] ET AL) 9. Januar 2001 (2001-01-09) * das ganze Dokument * ----- | 1-3,5,7 | |
| X | US 4 490 070 A (UPCHURCH OTHA D [US] ET AL) 25. Dezember 1984 (1984-12-25) * Spalte 2, Zeile 66 - Spalte 4, Zeile 37 * ----- | 1-3,5,7 | |
| A | US 3 756 203 A (DEDOES A) 4. September 1973 (1973-09-04) * das ganze Dokument * ----- | 4,6 | RECHERCHIERTE SACHGEBIETE (IPC) A01B A01F E02D E02F E01C |
| A | US 4 158 391 A (CLEMENTS BOYD D) 19. Juni 1979 (1979-06-19) * Spalte 3, Zeile 10 - Spalte 5, Zeile 65; Abbildungen 1-3 * ----- | 6 | |

Der vorliegende Recherchenbericht wurde für alle Patentansprüche erstellt

| Recherchenort | Abschlußdatum der Recherche | Prüfer |
|---|---|---|
| München | 15. September 2011 | Simson, Guenter |

**ANHANG ZUM EUROPÄISCHEN RECHERCHENBERICHT
ÜBER DIE EUROPÄISCHE PATENTANMELDUNG NR.**

EP 11 16 6047

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-09-2011

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| EP | 1423998 | A1 | 02-06-2004 | AT<br>DE<br>DK<br>ES | 315890<br>10256061<br>1423998<br>2255655 | T<br>A1<br>T3<br>T3 | 15-02-2006<br>17-06-2004<br>06-03-2006<br>01-07-2006 |
| US | 4911248 | A | 27-03-1990 | KEINE | | | |
| US | 6171020 | B1 | 09-01-2001 | KEINE | | | |
| US | 4490070 | A | 25-12-1984 | KEINE | | | |
| US | 3756203 | A | 04-09-1973 | KEINE | | | |
| US | 4158391 | A | 19-06-1979 | CA | 1081524 | A1 | 15-07-1980 |

EPO FORM P0461

Für nähere Einzelheiten zu diesem Anhang : siehe Amtsblatt des Europäischen Patentamts, Nr.12/82